# EUROPÄISCHE PATENTSCHRIFT

(11) **EP 1 288 048 B1**
(45) Veröffentlichungstag und Bekanntmachung des Hinweises auf die Patenterteilung: **12.03.2008**
(21) Anmeldenummer: 02016976.9
(22) Anmeldetag: 02.08.2002
(51) Int. Cl.: B60J 7/22

(54) **Windabweiser mit Betätigungselement für ein Schiebedachsystem**
Wind deflector with actuating means for a slidable roof system
Déflecteur de vent avec des éléments d'actionnement pour un toit coulissant

(30) Priorität: 28.08.2001 DE 10142047
(43) Veröffentlichungstag der Anmeldung: 05.03.2003
(73) Patentinhaber: ArvinMeritor GmbH, 63128 Dietzenbach (DE)
(72) Erfinder: Lane, Peter, 64853 Otzberg (DE)
(74) Vertreter: Sties, Jochen

(56) Entgegenhaltungen:
- WO-A-01/10660
- US-A- 5 833 305
- US-A- 5 836 066

## Beschreibung

Die Erfindung betrifft einen Windabweiser mit einem Betätigungselement für ein Schiebedachsystem, wobei der Windabweiser mittels des Betätigungselements zwischen einer ausgestellten Stellung und einer abgesenkten Stellung verstellbar ist. Ein Windabweiser dieser Art ist aus US 5 833 305 A bekannt.

Ein weiterer solcher Windabweiser ist beispielsweise aus der DE 198 02 301 AI bekannt. Bei diesem Windabweiser ist ein separater Windabweiser-Elektromotor vorgesehen, der unabhängig von dem Elektromotor angesteuert werden kann, der zur Verstellung eines Schiebedachdeckels des Schiebedachsystems verwendet wird.

Nachteilig bei diesem bekannten Windabweiser sind der hohe Bauaufwand und die hohen Kosten, insbesondere für den separaten Elektromotor.

Die Aufgabe der Erfindung besteht darin, einen Windabweiser der eingangs genannten Art dahingehend weiterzuentwickeln, daß er bei geringem Bauaufwand unabhängig von der Betätigung des Schiebedachdeckels zwischen der abgesenkten und der ausgestellten Stellung verstellbar ist.

Zu diesem Zweck ist bei einem Windabweiser der eingangs genannten Art vorgesehen, daß das Betätigungselement aus einer Formgedächtnislegierung besteht, so daß es in Abhängigkeit von seiner Temperatur einen ersten Zustand oder einen zweiten Zustand annehmen kann. Eine solche Formgedächtnislegierung ist auch als "Zweiwege-Memory-Legierung" bekannt. Im Ausgangszustand befindet sich die Legierung im martensitischen Zustand. Wird die Legierung über die austenitische Umwandlungstemperatur hinaus erwärmt, gelangt ihr Kristallgitter in den austenitischen Zustand. In diesem Zustand erfährt das Betätigungselement eine Formänderung, durch die das Betätigungselement Arbeit verrichten kann. Wenn die Formgedächtnislegierung wieder abkühlt, gelangt sie wieder in den martensitischen Zustand. Dabei kehrt das Betätigungselement in seine erste Form zurück. Dieser Übergang zwischen einem ersten und einem zweiten Zustand oder einer ersten und einer zweiten Form kann nahezu beliebig oft hervorgerufen werden.

Zur Änderung der Temperatur des Betätigungselementes kann eine Stromversorgung vorgesehen sein, die einen Heizstrom durch das Betätigungselement leiten kann. Auf diese Weise wird das Betätigungselement unmittelbar durch die widerstandsbedingte Verlustwärme der Formgedächtnislegierung erwärmt, was sehr kurze Schaltzeiten ermöglicht.

Ein besonders geeignetes Material für die Formgedächtnislegierung ist eine NiTi-Legierung. Dieses Material ermöglicht sehr hohe Zykluszahlen. Außerdem kann die Übergangstemperatur von der martensitischen in die austenitische Phase in großen Bereichen eingestellt werden.

Gemäß der bevorzugten Ausführungsform der Erfindung ist vorgesehen, daß der Windabweiser einen Leerhub ohne Verstellung des Betätigungselementes ausführen kann. Ein solcher Leerhub ist beispielsweise dann erforderlich, wenn der Windabweiser beim Öffnen oder Schließen des Schiebedachdeckels von diesem verstellt wird, ohne daß zu diesem Zweck das Betätigungselement benutzt wird.

Gemäß der bevorzugten Ausführungsform der Erfindung ist vorgesehen, daß das Betätigungselement ein Draht ist, der in seinem ersten Zustand eine erste Länge und in seinem zweiten Zustand eine zweite Länge hat. Auf diese Weise ergibt sich eine besonders kompakte Ausführungsform. Der Draht kann sich parallel zum Windabweiser unter diesem erstrecken. Somit ist kein zusätzlicher Bauraum erforderlich. Beim Übergang vom martensitischen Zustand in den austenitischen Zustand verkürzt sich der Draht, wobei er eine vergleichsweise hohe Zugkraft ausüben kann. Auf diese Weise können hohe Betätigungskräfte bereitgestellt werden.

Vorzugsweise ist eine Ausstellfeder vorgesehen, die den Windabweiser in die ausgestellte Stellung beaufschlagt, wobei der Draht den Windabweiser aus der ausgestellten Stellung in die abgesenkte Stellung ziehen kann. Dies ist besonders dann vorteilhaft, wenn zusätzlich eine Steuerelektronik vorgesehen ist, welche die Temperatur des Betätigungselementes in Abhängigkeit von Windgeräuschen steuert, die vom Schiebedachsystem erzeugt werden. Sobald die Steuerelektronik solche Windgeräusche erfaßt, beispielsweise ein "Wummern", also ein sehr niederfrequentes Dröhnen, kann der Draht mit Strom versorgt werden, so daß er den Windabweiser in die abgesenkte Stellung überführt. Die sich daraus ergebende Änderung der Strömungsverhältnisse am Schiebedachsystem ist in vielen Fällen ausreichend, um das Wummern zu beseitigen. Alternativ kann vorgesehen sein, den Windabweiser geschwindigkeitsabhängig einzufahren, wenn bekannt ist, bei welcher Fahrzeuggeschwindigkeit das niederfrequente Dröhnen auftritt. Eine weitere Alternative besteht darin, den Windabweiser in Abhängigkeit von Druckschwankungen im Fahrzeuginnenraum zu steuern.

Vorzugsweise ist vorgesehen, daß der Draht unmittelbar an dem Windabweiser angreift, wobei sich der Draht entlang einer Halteschiene für den Windabweiser erstreckt und durch ein Umlenkelement verläuft. Diese Ausführungsform zeichnet sich durch besonders geringen Bauaufwand aus.

Gemäß einer alternativen Ausführungsform ist vorgesehen, daß der Draht an einem verstellbaren Zwischenelement angreift und daß am Zwischenelement ein Verbindungselement angebracht ist, das mit dem Windabweiser verbunden ist. Dabei ist das Zwischenelement vorzugsweise ein Schwenkhebel, wobei der Draht an dem Schwenkhebel an einem ersten Radius angreift, der kürzer ist als ein zweiter Radius, an dem das Verbindungselement angreift. Bei dieser Ausführungsform ergibt sich eine Übersetzung des Betätigungshubes des Drahtes. Der Draht kann also vergleichsweise kurz ausgeführt werden. Die vom Draht bei seiner Verkürzung bereitgestellten Betätigungskräfte sind in jedem Fall ausreichend, um den Windabweiser trotz der Übersetzung des Hubes aus der ausgestellten Stellung in eine zumindest teilweise abgesenkte Stellung zu überführen.

Gemäß einer alternativen Ausführungsform kann der Schwenkhebel auch mit waagerecht angeordneter Schwenkachse ausgebildet werden, so daß sich sein Schwenkarm in vertikaler Richtung verstellt. Der Schwenkarm kann dann direkt oder mittels eines Zwischenhebels am Windabweiser angreifen.

Vorteilhafte Ausgestaltungen der Erfindung ergeben sich aus den Unteransprüchen.

Die Erfindung wird nachfolgend anhand zweier beispielhaften Ausführungsformen beschrieben, die in den beigefügten Zeichnungen dargestellt sind. In diesen zeigen:
- Figur 1 in einer schematischen, perspektivischen Ansicht ei n Fahrzeugdach mit Schiebedachsystem, in welchem ein erfindungsgemäßer Windabweiser verwendet wird;
- Figur 2 in einer perspektivischen, schematischen und abgeb rochenen Ansicht einen Windabweiser, der im Schiebedachsystem von Figur 1 verwendet wird;
- Figur 3 in einer Ansicht entsprechend derjenigen von Figur 2 einen Windabweiser gemäß einer ersten Ausführungsform im ausgestellten Zustand;
- Figur 4 in vergrößertem Maßstab einen Ausschnitt von Figur 3;
- Figur 5 den Windabweiser von Figur 3 in einer abgesenkten Stellung;
- Figur 6 in vergrößertem Maßstab einen Ausschnitt von Figur 5;
- Figur 7 in einer perspektivischen Ansicht einen Windabweiser gemäß einer zweiten Ausführungsform in der ausgestellten Stellung;
- Figur 8 in vergrößertem Maßstab einen Ausschnitt von Figur 7;
- Figur 9 den Windabweiser von Figur 7, nachdem das Betätigungselement einen Leerhub ausgeführt hat; und
- Figur 10 in vergrößertem Maßstab einen Ausschnitt von Figur 9.

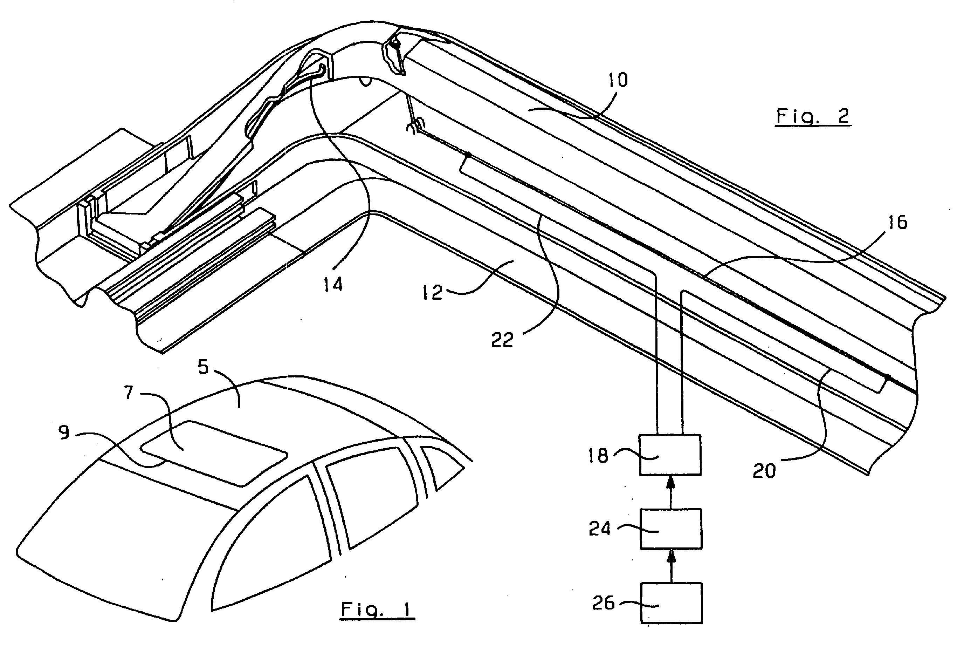

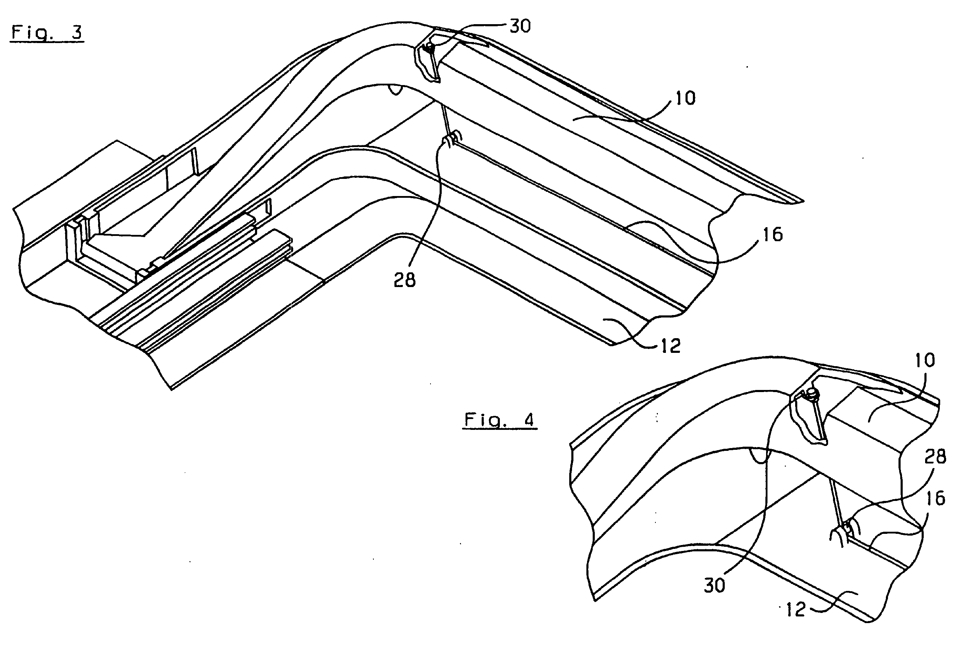

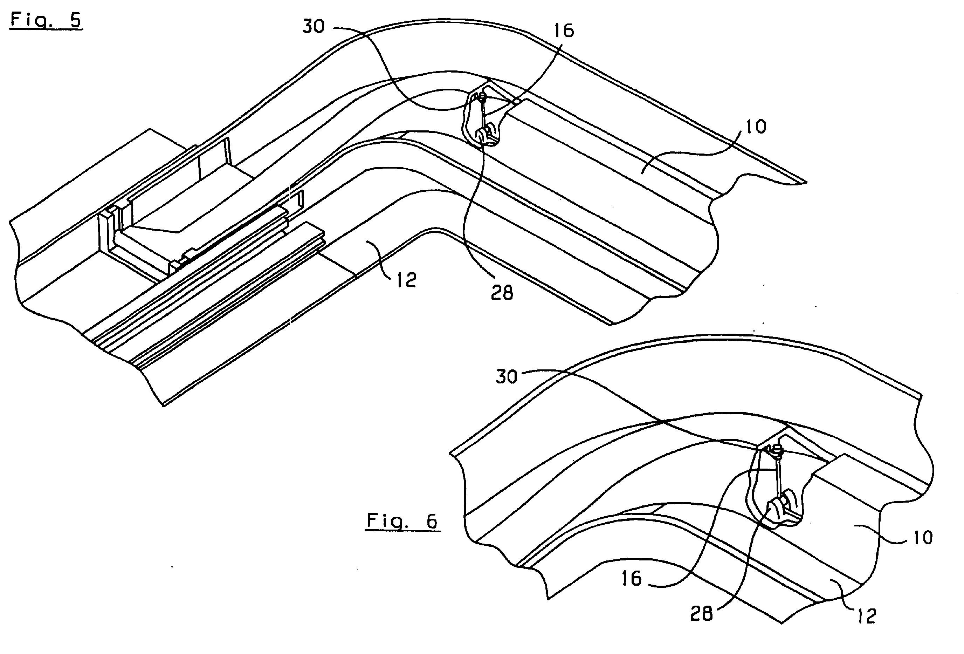

In Figur 1 ist schematisch ein Fahrzeug mit einem Fahrzeugdach 5 gezeigt, in welchem ein Schiebedachsystem mit einem Schiebedachdeckel 7 angebracht ist. Der Schiebedachdeckel 7 kann aus seiner in Figur 1 dargestellten, geschlossenen Stellung in eine geöffnete Stellung überführt werden, in der er bezüglich der Längsrichtung des Fahrzeugs nach hinten so verstellt ist, daß er die Dachöffnung des Fahrzeugs freigibt. Am in Fahrtrichtung gesehen vorderen Rand (in Figur 1 mit dem Bezugszeichen 9 bezeichnet) ist ein Windabweiser 10 (siehe die Figuren 2 bis 6) angebracht, der zwischen einer ausgestellten Stellung (siehe Figur 3) und einer abgesenkten Stellung (siehe Figur 5) verstellbar ist. Der Windabweiser 10 ist an einer Halteschiene 12 angebracht, die sich entlang den Längsrändern der Dachöffnung und entlang dem vorderen Rand 9 erstreckt und die zugleich auch zur Führung des Schiebedachdeckels 7 dienen kann. Zwischen dem Windabweiser 10 und der Halteschiene 12 ist eine Ausstellfeder 14 (siehe Figur 2) angeordnet, die den Windabweiser in die ausgestellte Stellung beaufschlagt. In an sich bekannter Weise wirkt der Schiebedachdeckel 7 derart mit dem Windabweiser 10 zusammen, daß der Windabweiser in die vollständig abgesenkte Stellung bewegt wird, wenn der Schiebedachdeckel geschlossen wird, und wieder in die ausgestellte Stellung zurückkehrt, wenn der Schiebedachdeckel geöffnet wird.

Es ist ein Betätigungselement 16 vorgesehen, mittels dem der Windabweiser 10 selektiv, also unabhängig von der Betätigung durch den Schiebedachdeckel 7, aus der ausgestellten Stellung in eine teilweise oder vollständig abgesenkte Stellung gebracht werden kann, während sich der Schiebedachdeckel 7 in der geöffneten Stellung befindet. Das Betätigungselement 16 ist gebildet durch einen Draht, der aus einer Legierung mit Formgedächtnis besteht, die in Abhängigkeit von ihrer Temperatur einen ersten Zustand mit einer ersten Länge und eine zweiten Zustand mit einer zweiten Länge hat. Im ersten Zustand, der bei üblicher Umgebungstemperatur vorliegt, hat der Draht eine erste Länge, die so gewählt ist, daß sich der Windabweiser 10 in der ausgestellten Stellung befindet. Wenn der Draht sich auf seiner zweiten Temperatur befindet, hat er eine zweite Länge, die kürzer ist als die erste. Beim Übergang von der ersten Länge zur kürzeren zweiten Länge zieht der Draht 16 den Windabweiser in die abgesenkte Stellung

Die zweite, höhere Temperatur wird erzeugt, indem durch den Draht 16 ein Heizstrom geschickt wird. Dieser wird von einer Stromversorgung 18 bereitgestellt, die über zwei Anschlußkabel 20, 22 so an den Draht 16 angeschlossen ist, daß der Heizstrom durch einen Großteil seiner Länge geschickt werden kann. Die Stromversorgung 18 wird von einer Steuerelektronik 24 angesteuert, die wiederum Signale von einem Sensor 26 empfängt. Der Sensor 26 kann beispielsweise ein Mikrofon sein. Auf diese Weise kann die Steuerelektronik 24 erkennen, ob bei geöffnetem Schiebedachdeckel 7 ein niederfrequentes Dröhnen auftritt, das durch Einfahren des Windabweisers 10 beseitigt werden kann. Die Steuerelektronik 24 aktiviert in diesem Fall die Stromversorgung 18, die den Heizstrom durch den Draht 16 schickt. Dieser erhitzt sich daraufhin durch die in ihm anfallende, widerstandsbedingte Verlustwärme, so daß sich der Draht aufgrund einer Zustandsänderung vom martensitischen Zustand in den austenitischen Zustand verkürzt. Diese Verkürzung wird so umgesetzt, daß der Windabweiser entweder vollständig, falls dies erforderlich ist, oder wenigstens teilweise eingefahren wird, und zwar so weit, daß das Dröhnen beseitigt ist. Wenn der Windabweiser wieder ausgefahren werden soll, wird der Heizstrom unterbrochen, so daß sich der Draht 16 abkühlt. Dabei kehrt er in seinen martensitischen Zustand zurück, in dem er wieder die Ausgangslänge hat. Der Windabweiser kehrt dabei in seine ausgestellte Stellung zurück.

Wie in den Figuren 3 bis 6 zu sehen ist, ist der Draht 16 bei der ersten Ausführungsform parallel zum vorderen Abschnitt des Windabweisers 10, also parallel zum vorderen Rand 9 der Dachöffnung, an dem sogenannten Frontteil der Halteschiene 12 unterhalb des Windabweisers 10 angebracht. An seinem in den Figuren 3 bis 6 nicht dargestellten, rechten Ende ist der Draht 16 fest an der Halteschiene befestigt. Von dort erstreckt er sich hin zu einem Umlenkelement 28, wo er senkrecht nach oben hin zum Windabweiser 10 umgelenkt wird. Am Windabweiser ist der Draht 16 an einer Befestigungslasche 30 angebracht.

Wenn bei ausgestelltem Windabweiser, wie er in den Figuren 3 und 4 gezeigt ist, der Schiebedachdeckel 7 geschlossen wird, wird der Windabweiser 10 nach unten in seine abgesenkte Stellung gedrückt. Da der Draht 16 flexibel ist, kann der Windabweiser 10 den Leerhub problemlos ausführen. Wenn der Windabweiser unabhängig vom Schiebedachdeckel 7 aus der ausgestellten Stellung, wie sie in den Figuren 3 und 4 gezeigt ist, in die in den Figuren 5 und 6 gezeigte, abgesenkte Stellung überführt werden soll, wird durch den Draht 16 ein Heizstrom geschickt, so daß dieser sich erwärmt und verkürzt. Bei der Verkürzung wird das an der Befestigungslasche 30 angebrachte Ende des Drahtes 16 näher zum Umlenkelement 28 gezogen, wodurch der Windabweiser 10 in die abgesenkte Stellung gelangt. Soll der Windabweiser 10 wieder ausgefahren werden, wird der Heizstrom unterbrochen, so daß die Temperatur des Drahtes auf den Wert der Umgebungstemperatur absinkt. Die dabei auftretende Verlängerung des Drahtes ermöglicht der Ausstellfeder 14, den Windabweiser 10 wieder in die ausgestellte Stellung zu drücken.

Der Draht 16 ist mindestens an einer seiner Seiten, entweder am Umlenkelement 28 oder an seinem anderen, an der Halteschiene 12 befestigten Ende relativ zur Halteschiene isoliert, so daß der Heizstrom ausschließlich durch den Draht 16 fließt. Die Übergangstemperatur, bei welcher der Draht 16 von seinem längeren ersten Zustand in seinen kürzeren zweiten Zustand übergeht, ist so gewählt, daß sie oberhalb der beim Betrieb des Fahrzeugs maximal erreichten Umgebungstemperatur liegt, also oberhalb von etwa 40°C. Dies gewährleistet, daß der Draht 16 nicht von der ihn umgebenden Luft auf eine Temperatur aufgeheizt wird, die oberhalb der Übergangstemperatur liegt. Dann würde der Draht 16 nämlich unabhängig von einem durch ihn geschickten Heizstrom den Windabweiser 10 immer in der abgesenkten Stellung halten. Es ist nicht unbedingt erforderlich, daß die Übergangstemperatur höher liegt als die Temperatur, auf die sich das Fahrzeug maximal aufheizt, beispielsweise bei langer Sonneneinstrahlung. Selbst wenn die dann erreichten Temperaturen, beispielsweise 80°C, oberhalb der Übergangstemperatur liegen, wird zwar der Windabweiser vom sich dann im austenitischen Zustand befindenden Draht 16 in der zumindest teilweise abgesenkten Stellung gehalten, wenn der Schiebedachdeckel 7 geöffnet wird. Da aber bei geöffnetem Schiebedachdeckel die Temperatur im Bereich des Windabweisers, insbesondere im Fahrbetrieb, rasch auf die Temperatur der Umgebungsluft absinken wird, gelangt der Draht 16 sehr schnell wieder in seinen martensitischen, also längeren Zustand. Der Windabweiser 10 fährt dann aus, so daß wieder der übliche Betrieb möglich ist. Falls das verzögerte Ausfahren des Windabweisers bei stark aufgeheiztem Fahrzeug unerwünscht ist, kann eine Formgedächtnislegierung verwendet werden, deren Übergangstemperatur oberhalb von beispielsweise etwa 80°C liegt.

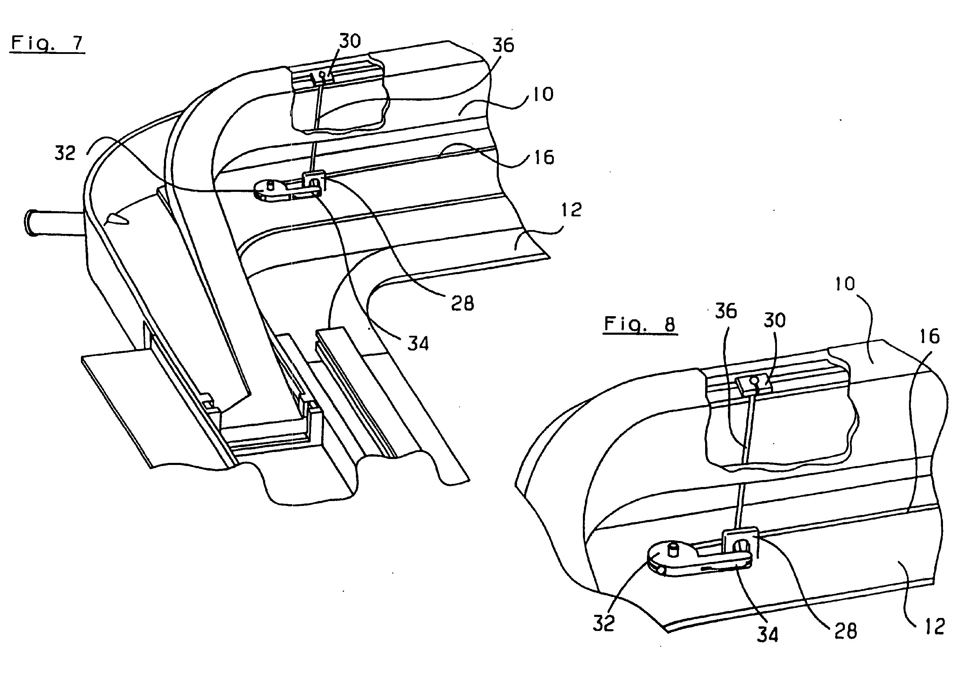

In den Figuren 7 bis 10 ist ein Windabweiser gemäß einer zweiten Ausführungsform gezeigt. Für die von der ersten Ausführungsform bekannten Bauteile werden dieselben Bezugszeichen verwendet, und es wird auf die obigen Erläuterungen verwiesen.

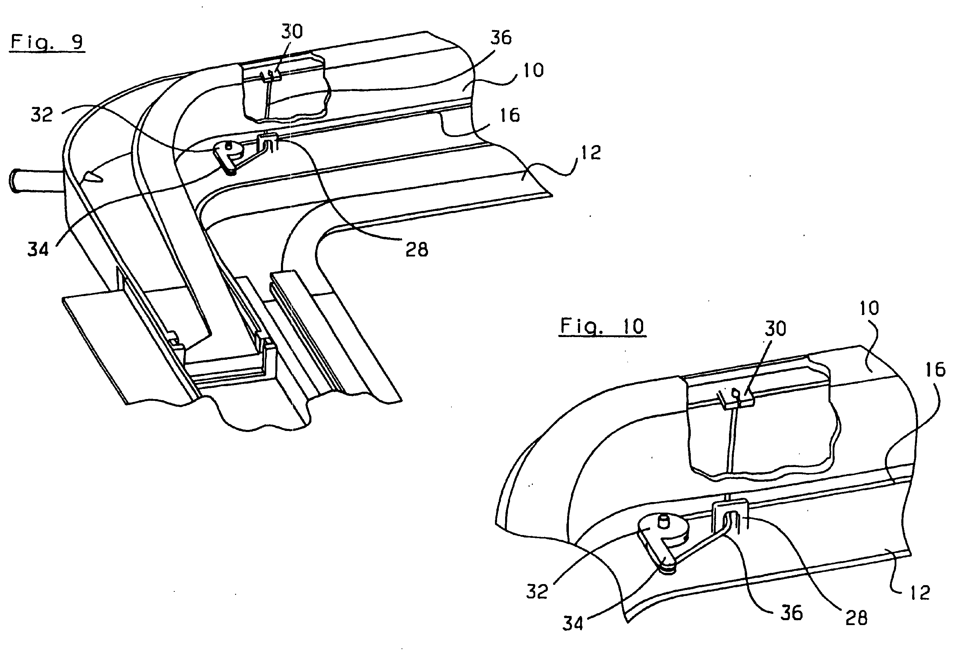

Im Unterschied zur ersten Ausführungsform greift der Draht 16 bei der zweiten Ausführungsform nicht unmittelbar am Windabweiser 10 an. Er greift statt dessen an einem Zwischenelement 32 an, das als Schwenkhebel ausgebildet ist. Der Schwenkhebel ist mit einem Schwenkarm 34 versehen, an dem ein Verbindungselement 36 angreift. Das Verbindungselement 36 wird durch das Umlenk-element 28 hin zur Befestigungslasche 30 am Windabweiser 10 geführt. Das Verbindungselement 36 kann ein biegsames Seil sein, das unterstützt von einer (nicht dargestellten) Feder in den Schwenkhebel eingezogen werden kann. Dieser Zustand ist in den Figuren 7 und 8 gezeigt. In den Figuren 9 und 10 ist der Schwenkhebel 32 in einem Zustand nach Ausführen eines Leerhubes gezeigt. Wenn ausgehend von diesem Zustand der Draht 16 seine Länge verringert, wird der Schwenkhebel 32 im Uhrzeigersinn verschwenkt, so daß die Befestigungslasche 30 an das Umlenkelement 28 herangezogen wird und der Windabweiser 10 in seine abgesenkte Stellung gelangt. Der Vorteil bei dieser Ausführungsform besteht darin, daß aufgrund der unterschiedlichen Radien, an denen der Draht 16 einerseits und das Verbindungselement 36 andererseits am Schwenkhebel 32 angreifen, eine Übersetzung des vergleichsweise kleinen Hubes des Drahtes 16 in einem größeren Hub des Verbindungselementes 36 möglich ist. Somit kann mit einer vergleichsweise kurzen Länge des Drahtes 16 der vollständige Hub am Windabweiser 10 erhalten werden.

Es ist auch möglich, die Formänderung der Zweiwege-Memory- Legierung dazu zu verwenden, den Deckel eines Hubdachs zwischen der geschlossenen Stellung und der ausgestellten Stellung zu verändern, oder umgekehrt.

### Bezugszeichenliste:

- 5:: Fahrzeugdach
- 7:: Schiebedachdeckel
- 9:: Vorderer Rand
- 10:: Windabweiser
- 12:: Halteschiene
- 14:: Ausstellfeder
- 16:: Betätigungselement
- 18:: Stromversorgung
- 20:: Anschlußkabel
- 22:: Anschlußkabel
- 24:: Steuerelektronik
- 26:: Sensor
- 28:: Umlenkelement
- 30:: Befestigungslasche
- 32:: Zwischenelement
- 34:: Schwenkarm
- 36: Verbindungselement

## Patentansprüche

1. Windabweiser (10) mit einem Betätigungselement (16) für ein Schiebedachsystem, wobei der Windabweiser (10) mittels des Betätigungselements (16) zwischen einer ausgestellten Stellung und einer abgesenkten Stellung verstellbar ist, **dadurch gekennzeichnet, daß** das Betätigungselement (16) aus einer Formgedächtnislegierung besteht, so daß es in Abhängigkeit von seiner Temperatur einen ersten Zustand oder einen zweiten Zustand annehmen kann.

2. Windabweiser nach Anspruch 1, **dadurch gekennzeichnet, daß** eine Stromversorgung (18) vorgesehen ist, die einen Heizstrom durch das Betätigungselement (16) leiten kann.

3. Windabweiser nach einem der vorhergehenden Ansprüche, **dadurch gekennzeichnet, daß** die Formgedächtnislegierung eine NiTi-Legierung ist.

4. Windabweiser nach einem der vorhergehenden Ansprüche, **dadurch gekennzeichnet, daß** er einen Leerhub ohne Verstellung des Betätigungselementes (16) ausführen kann.

5. Windabweiser nach einem der vorhergehenden Ansprüche, **dadurch gekennzeichnet, daß** das Betätigungselement ein Draht (16) ist, der in seinem ersten Zustand eine erste Länge und in seinem zweiten Zustand eine zweite Länge hat.

6. Windabweiser nach Anspruch 5, **dadurch gekennzeichnet, daß** eine Ausstellfeder (14) vorgesehen ist, die den Windabweiser (10) in die ausgestellte Stellung beaufschlagt, und daß der Draht (16) den Windabweiser (10) aus der ausgestellten Stellung in die abgesenkte Stellung ziehen kann.

7. Windabweiser nach einem der Ansprüche 5 und 6, **dadurch gekennzeichnet, daß** der Draht (16) unmittelbar an dem Windabweiser (10) angreift.

8. Windabweiser nach Anspruch 7, **dadurch gekennzeichnet, daß** er an einer Halteschiene (12) angebracht ist und der Draht (16) sich entlang der Halteschiene (12) erstreckt und daß der Draht (16) durch ein Umlenkelement (28) verläuft.

9. Windabweiser nach einem der Ansprüche 5 und 6, **dadurch gekennzeichnet, daß** der Draht (16) an einem verstellbaren Zwischenelement (32) angreift und daß am Zwischenelement ein Verbindungselement (36) angebracht ist, das mit dem Windabweiser (10) verbunden ist, so daß eine Hubübersetzung realisiert werden kann.

10. Windabweiser nach Anspruch 9, **dadurch gekennzeichnet, daß** das Zwischenelement ein Schwenkhebel (32) ist und daß der Draht an dem Schwenkhebel (32) an einem ersten Radius angreift, der kürzer ist als ein zweiter Radius, an dem das Verbindungselement (36) angreift.

11. Windabweiser nach einem der vorhergehenden Ansprüche, **dadurch gekennzeichnet, daß** eine Steuerelektronik (24) vorgesehen ist, welche die Temperatur des Betätigungselementes (16) in Abhängigkeit von Windgeräuschen steuert, die vom Schiebedachsystem erzeugt werden.

12. Windabweiser nach einem der Ansprüche 1 bis 10, **dadurch gekennzeichnet, daß** eine Steuerelektronik (24) vorgesehen ist, welche die Temperatur des Betätigungselementes (16) in Abhängigkeit von der Fahrzeuggeschwindkeit steuert.

13. Windabweiser nach einem der Ansprüche 1 bis 10, **dadurch gekennzeichnet, daß** eine Steuerelektronik (24) vorgesehen ist, welche die Temperatur des Betätigungselementes (16) in Abhängigkeit von Druckschwankungen im Fahrzeuginnenraum steuert.

## Claims

1. Wind deflector (10), with an actuating element (16), for a slideable roof system, wherein the wind deflector (10) can be adjusted between a deployed position and a lowered position by means of the actuating element (16), **characterized in that** the actuating element (16) is composed of a shape memory alloy, and therefore it can assume a first state or a second state as a function of its temperature.

2. Wind deflector according to Claim 1, **characterized in that** a current supply (18) which can conduct a heating current through the actuating element (16) is provided.

3. Wind deflector according to one of the preceding claims, **characterized in that** the shape memory alloy is an NiTi alloy.

4. Wind deflector according to one of the preceding claims, **characterized in that** it can execute an empty stroke without adjusting the actuating element (16).

5. Wind deflector according to one of the preceding claims, **characterized in that** the actuating element is a wire (16) which has a first length in its first state and a second length in its second state.

6. Wind deflector according to Claim 5, **characterized in that** a deployment spring (16) which pressurizes the wind deflector (10) into the deployed position is provided, and **in that** the wire (16) can pull the wind deflector (10) out of the deployed position into the lowered position.

7. Wind deflector according to either of Claims 5 and 6, **characterized in that** the wire (16) acts directly on the wind deflector (10).

8. Wind deflector according to Claim 7, **characterized in that** it is attached to a retaining rail (12) and the wire (16) extends along the retaining rail (12), and **in that** the wire (16) runs through a deflecting element (28).

9. Wind deflector according to either of Claims 5 and 6, **characterized in that** the wire (16) acts on an adjustable intermediate element (32), and **in that** a connecting element (36) is attached to the intermediate element and is connected to the wind deflector (10) such that a stroke transmission can be realized.

10. Wind deflector according to Claim 9, **characterized in that** the intermediate element is a pivot lever (32), and **in that** wire acts on the pivot lever (32) on a first radius which is shorter than a second radius on which the connecting element (36) acts.

11. Wind deflector according to one of the preceding claims, **characterized in that** an electronic control system (24) is provided, said system controlling the temperature of the actuating element (16) as a function of wind noises which are generated by the slideable roof system.

12. Wind deflector according to one of Claims 1 to 10, **characterized in that** an electronic control system (24) is provided, the system controlling the temperature of the actuating element (16) as a function of the vehicle speed.

13. Wind deflector according to one of Claims 1 to 10, **characterized in that** an electronic control system (24) is provided, said system controlling the temperature of the actuating element (16) as a function of pressure fluctuations in the vehicle interior.

## Revendications

1. Déflecteur de vent (10), comprenant un élément d'actionnement (16), pour un système de toit ouvrant, le déflecteur de vent (10) pouvant être réglé entre une position sortie et une position rentrée au moyen de l'élément d'actionnement, **caractérisé en ce que** l'élément d'actionnement (16) se compose d'un alliage à mémoire de forme, de sorte qu'il puisse prendre un premier état ou un deuxième état en fonction de sa température.

2. Déflecteur de vent selon la revendication 1, **caractérisé en ce qu'**il est prévu une alimentation en courant (18) qui peut conduire un courant de chauffage à travers l'élément d'actionnement (16).

3. Déflecteur de vent selon l'une quelconque des revendications précédentes, **caractérisé en ce que** l'alliage à mémoire de forme est un alliage de NiTi.

4. Déflecteur de vent selon l'une quelconque des revendications précédentes, **caractérisé en ce qu'**il peut effectuer une course à vide sans réglage de l'élément d'actionnement (16).

5. Déflecteur de vent selon l'une quelconque des revendications précédentes, **caractérisé en ce que** l'élément d'actionnement est un fil (16) qui présente dans son premier état une première longueur et dans son deuxième état une deuxième longueur.

6. Déflecteur de vent selon la revendication 5, **caractérisé en ce qu'**un champ de sortie (14) est prévu, lequel sollicite le déflecteur de vent (10) dans la position sortie, et **en ce que** le fil (16) peut tirer le déflecteur de vent (10) de la position sortie dans la position rentrée.

7. Déflecteur de vent selon l'une quelconque des revendications 5 et 6, **caractérisé en ce que** le fil (16) vient en prise directement avec le déflecteur de vent (10).

8. Déflecteur de vent selon la revendication 7, **caractérisé en ce qu'**il est monté sur un rail de retenue (12) et le fil (16) s'étend le long du rail de retenue (12) et **en ce que** le fil (16) passe par un élément de déviation (28).

9. Déflecteur de vent selon l'une quelconque des revendications 5 et 6, **caractérisé en ce que** le fil (16) vient en prise avec un élément intermédiaire réglable (32) et **en ce qu'**un élément de connexion (36) est monté sur l'élément intermédiaire et est connecté au déflecteur de vent (10), de telle sorte que l'on puisse réaliser un transfert de course.

10. Déflecteur de vent selon la revendication 9, **caractérisé en ce que** l'élément intermédiaire est un levier pivotant (32) et **en ce que** le fil vient en prise au niveau d'un premier rayon avec le levier pivotant (32), le premier rayon étant plus court qu'un deuxième rayon au niveau duquel l'élément de connexion vient en prise (36).

11. Déflecteur de vent selon l'une quelconque des revendications précédentes, **caractérisé en ce qu'**une électronique de commande (24) est prévue, laquelle commande la température de l'élément d'actionnement (16) en fonction de bruits du vent produits par le système de toit ouvrant.

12. Déflecteur de vent selon l'une quelconque des revendications 1 à 10, **caractérisé en ce qu'**il est prévu une électronique de commande (24) qui commande la température de l'élément d'actionnement (16) en fonction de la vitesse du véhicule.

13. Déflecteur de vent selon l'une quelconque des revendications 1 à 10, **caractérisé en ce qu'**il est prévu une électronique de commande (24) qui commande la température de l'élément d'actionnement (16) en fonction des variations de pression dans l'habitacle du véhicule.
